# EUROPEAN PATENT APPLICATION

(11) **EP 4 727 006 A1**
(43) Date of publication of application: **15.04.2026**
(21) Application number: 23942162.1
(22) Date of filing: 28.11.2023
(51) Int. Cl.: H02P 27/08, H02M 1/088, H02M 7/5387

(54) **ELECTRIC MOTOR CONTROLLER, VEHICLE BRAKE SYSTEM AND ELECTRIC VEHICLE**

(30) Priority: 21.06.2023 CN 202321610342 U
(71) Applicant: Huawei Digital Power Technologies Co., Ltd., Shenzhen, Guangdong 518043 (CN)
(72) Inventor: KONG, Xuejuan, Shenzhen, Guangdong 518043 (CN); ZOU, Dingchao, Shenzhen, Guangdong 518043 (CN); CUI, Zhaoxue, Shenzhen, Guangdong 518043 (CN)
(74) Representative: Epping - Hermann - Fischer
(86) International application number: PCT/CN2023/134812
(87) International publication number: WO 2024/259896

(57) **Abstract**

This application provides a motor control unit, including an inverter circuit, a safety monitoring circuit, a drive circuit, a turn-off control circuit, and an input control circuit. The safety monitoring circuit is configured to output a turn-off signal to the drive circuit and the turn-off control circuit; in response to receiving the turn-off signal, the drive circuit controls the inverter circuit to stop working; and in response to receiving the turn-off signal, the turn-off control circuit controls the input control circuit to disconnect an electrical connection between a power source and the inverter circuit. This application further provides a vehicle braking system and an electric vehicle. Therefore, the motor control unit, the vehicle braking system, and the electronic vehicle provided in this application can implement dual redundant turn-off torque output, improve safety of the motor control unit, and reduce layout costs and an occupied area of a switching transistor.

## Description

### CROSS-REFERENCE TO RELATED APPLICATIONS

This application claims priority to Chinese Patent Application No. 202321610342.6, filed with the China National Intellectual Property Administration on June 21, 2023, and entitled "MOTOR CONTROL UNIT, VEHICLE BRAKING SYSTEM, AND ELECTRIC VEHICLE", which is incorporated herein by reference in its entirety.

### TECHNICAL FIELD

This application relates to the field of motor control technologies, and in particular, to a motor control unit, a vehicle braking system, and an electric vehicle.

### BACKGROUND

With development of electronic technologies, electric vehicles are more widely used. The electric vehicle usually controls torque of a motor through a motor control unit. To ensure functional safety of the electric vehicle, the motor control unit needs to cut off a torque output of the motor in response to abnormal running of the motor. Therefore, how to safely cut off the torque output of the motor when the motor runs abnormally becomes an important topic.

### SUMMARY

In view of the foregoing problem, this application provides a motor control unit, a vehicle braking system, and an electric vehicle, to implement dual redundant turn-off torque output, improve safety of a motor control unit, and reduce layout costs and an occupied area of a switching transistor. According to a first aspect, this application provides a motor control unit, including an inverter circuit, a safety monitoring circuit, a drive circuit, a turn-off control circuit, and an input control circuit. An input of the input control circuit is connected to a power source, an output of the input control circuit is connected to an input of the inverter circuit, and an output of the inverter circuit is connected to a motor. An output of the safety monitoring circuit is connected to an input of the drive circuit and an input of the turn-off control circuit, and the safety monitoring circuit is configured to output a turn-off signal to the drive circuit and the turn-off control circuit. An output of the drive circuit is connected to the inverter circuit, and in response to receiving the turn-off signal, the drive circuit controls the inverter circuit to stop working. An output of the turn-off control circuit is connected to the input control circuit, and in response to receiving the turn-off signal, the turn-off control circuit controls the input control circuit to disconnect an electrical connection between the power source and the inverter circuit. According to the motor control unit provided in this application, the input control circuit is disposed in front of the inverter circuit, and forms three turn-off paths in cooperation with the safety monitoring circuit, the drive circuit, and the turn-off control circuit, so that dual redundant turn-off torque output can be implemented, thereby enhancing safety of the motor control unit, and reducing layout costs and an occupied area of a switching transistor.

With reference to the first aspect, in a possible implementation, the safety monitoring circuit includes a microcontroller and a watchdog circuit, and the turn-off signal includes a first turn-off signal and a second turn-off signal. An output of the microcontroller is connected to the input of the drive circuit and the input of the turn-off control circuit, and the microcontroller is configured to output the first turn-off signal to the drive circuit and the turn-off control circuit. An output of the watchdog circuit is connected to the input of the drive circuit and the input of the turn-off control circuit, and the watchdog circuit is configured to output the second turn-off signal to the drive circuit and the turn-off control circuit. In response to receiving the first turn-off signal or the second turn-off signal, the drive circuit controls the inverter circuit to stop working. In response to receiving the first turn-off signal or the second turn-off signal, the turn-off control circuit controls the input control circuit to disconnect the electrical connection between the power source and the inverter circuit. According to the motor control unit provided in this application, three turn-off paths are implemented by using the microcontroller and the watchdog circuit, so that safety of the motor control unit can be enhanced.

With reference to the first aspect, in a possible implementation, an input of the microcontroller is configured to receive an input signal, the input signal indicates target torque of the motor, and the microcontroller is configured to: in response to the target torque exceeding a preset torque range, output the first turn-off signal to the drive circuit and the turn-off control circuit. According to the motor control unit provided in this application, the first turn-off signal can be output to the drive circuit and the turn-off control circuit when the target torque indicated by the input signal exceeds the preset range, to control the motor to stop outputting torque, so as to ensure safe running of the motor.

With reference to the first aspect, in a possible implementation, an input of the microcontroller is connected to the output of the drive circuit, and the microcontroller is configured to: in response to receiving a fault signal output by the drive circuit, output the first turn-off signal to the drive circuit and the turn-off control circuit, where the fault signal indicates that a fault occurs in the drive circuit. According to the motor control unit provided in this application, the first turn-off signal can be output to the drive circuit and the turn-off control circuit when the drive circuit is faulty (for example, overvoltage, overcurrent, undervoltage, or undercurrent occurs in the drive circuit), to control the motor to stop outputting torque, so as to ensure safe running of the motor. With reference to the first aspect, in a possible implementation, an input of the watchdog circuit is connected to the microcontroller, and the watchdog circuit is configured to: in response to receiving no watchdog feeding signal from the microcontroller within preset time, output the second turn-off signal to the drive circuit and the turn-off control circuit. According to the motor control unit provided in this application, whether the microcontroller is faulty can be determined, based on whether the watchdog circuit periodically receives the watchdog feeding signal sent by the microcontroller, to determine that the microcontroller is faulty when no watchdog feeding signal is received within the preset time, and output the first turn-off signal to the drive circuit and the turn-off control circuit, so as to control the motor to stop outputting torque, and ensure safe running of the motor.

With reference to the first aspect, in a possible implementation, the microcontroller is further configured to control turn-on or turn-off of a switching transistor in the inverter circuit based on the input signal, so that the motor outputs the target torque. According to the motor control unit provided in this application, turn-on or turn-off of the switching transistor in the inverter circuit can be controlled based on the target torque indicated by the input signal, so that the motor outputs corresponding torque.

With reference to the first aspect, in a possible implementation, the inverter circuit includes three switching bridge arms, each switching bridge arm includes an upper bridge arm switching transistor and a lower bridge arm switching transistor, the output of the drive circuit is connected to each of the upper bridge arm switching transistors and the lower bridge arm switching transistors, and that the drive circuit controls the inverter circuit to stop working includes: the drive circuit controls each of the upper bridge arm switching transistors to be turned off and each of the lower bridge arm switching transistors to be turned off. According to the motor control unit provided in this application, the drive circuit can control each switching transistor in the inverter circuit to be turned off, to control the motor to stop outputting torque.

With reference to the first aspect, in a possible implementation, the input control circuit includes a switching transistor, an input of the switching transistor is connected to the power source, an output of the switching transistor is connected to the input of the inverter circuit, and the turn-off control circuit is connected to the switching transistor. That the turn-off control circuit controls the input control circuit to disconnect the electrical connection between the power source and the inverter circuit includes: The turn-off control circuit controls the switching transistor to be turned off. According to the motor control unit provided in this application, the drive circuit can control each switching transistor in the inverter circuit to be turned off, to control the motor to stop outputting torque.

With reference to the first aspect, in a possible implementation, the switching transistor is a MOS transistor, the input of the switching transistor is a drain of the MOS transistor, and the output of the switching transistor is a source of the MOS.

According to a second aspect, this application provides a vehicle braking system, including a central controller and wheel-side actuators. The central controller is connected to the wheel-side actuators and is configured to control the wheel-side actuators, and the wheel-side actuators include the motor control unit provided in any possible implementation of the first aspect. According to a third aspect, this application provides an electric vehicle, including the motor control unit provided in any possible implementation of the first aspect or the vehicle braking system provided in any possible implementation of the second aspect.

With reference to the third aspect, in a possible implementation, the electric vehicle further includes a plurality of wheels, each of the plurality of wheels is connected to the motor control unit or the vehicle braking system, and the motor control unit or the vehicle braking system is configured to control running of each wheel.

In addition, for technical effects corresponding to the second aspect and the third aspect, refer to corresponding descriptions in the first aspect. Details are not described herein again.

### BRIEF DESCRIPTION OF DRAWINGS

FIG. 1 is a diagram of a structure of a vehicle braking system according to this application;
FIG. 2 is a diagram of a structure of a motor control unit according to this application;
FIG. 3 is a diagram of a structure of a safety monitoring circuit according to this application; and
FIG. 4 is a circuit schematic of an inverter circuit and an input control circuit according to this application.

### DESCRIPTION OF EMBODIMENTS

The following clearly describes the technical solutions in embodiments of this application with reference to the accompanying drawings in embodiments of this application.

It may be understood that a connection relationship described in this application is a direct or indirect connection. For example, that A is connected to B may be that A is directly connected to B, or may be that A is indirectly connected to B through one or more other electrical components. For example, A may be directly connected to C, and C may be directly connected to B, so that A and B are connected through C. It may be further understood that "A is connected to B" described in this application may be that A is directly connected to B, or may be that A is indirectly connected to B through one or more other electrical components.

In descriptions of this application, unless otherwise specified, "/" means "or". For example, A/B may indicate A or B. A term "and/or" in this specification describes only an association relationship between associated objects and indicates that there may be three relationships. For example, A and/or B may represent the following three cases: Only A exists, both A and B exist, and only B exists.

In the descriptions of this application, words such as "first" and "second" are merely used to distinguish between different objects, and do not limit quantities and execution sequences. In addition, the words such as "first" and "second" do not indicate a definite difference. In addition, the terms "include" and "have" and any variations thereof are intended to cover non-exclusive inclusion.

The technical solutions of this application are further described below in detail with reference to accompanying drawings.

With development of electronic technologies, electric vehicles are more widely used. The electric vehicle usually controls torque of a motor through a motor control unit. To ensure functional safety of the electric vehicle, the motor control unit needs to cut off a torque output of the motor in response to abnormal running of the motor. Therefore, how to safely cut off the torque output of the motor when the motor runs abnormally becomes an important topic.

Therefore, this application provides a motor control unit, a vehicle braking system, and an electric vehicle. A main switching transistor is disposed in front of an inverter circuit, and forms three turn-off paths in cooperation with a safety monitoring circuit, a pre-driver, and a turn-off control circuit, so that dual redundant turn-off torque output can be implemented, thereby enhancing safety of the motor control unit, and reducing layout costs and an occupied area of a switching transistor.

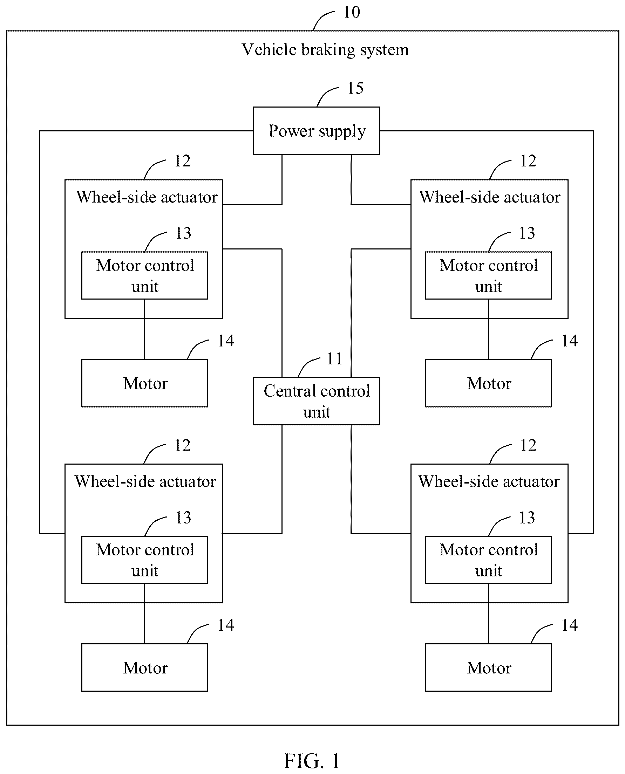

FIG. 1 is a diagram of a structure of a vehicle braking system 10 according to this application. The vehicle braking system 10 includes a central controller 11, wheel-side actuators 12, motors 14, and a power supply 15. The wheel-side actuator 12 includes a motor control unit 13.

The power supply 15 is electrically connected to the four wheel-side actuators 12. The power supply 15 is configured to supply power to the four wheel-side actuators 12.

The central controller 11 is electrically connected to the four wheel-side actuators 12. The central controller 11 is configured to output an adjustment signal to the four wheel-side actuators 12, to adjust alternating current parameters provided by the four wheel-side actuators 12 for the corresponding motors 14, so that the motors 14 output corresponding torque. Specifically, the four wheel-side actuators 12 are disposed respectively corresponding to four wheels of an electric vehicle, and the motor control units 13 in the four wheel-side actuators 12 are respectively connected to the motors 14 of the four wheels, to control running of the motors 14, so as to drive the four wheels or perform braking.

The central controller 11 may obtain a running state of the motor 14 and/or an external control signal, and output the adjustment signal based on the obtained running state of the motor and/or the external control signal. For example, the central controller 11 may be connected to an external controller such as a central control panel, a self-driving controller, a power steering controller, or a power domain controller, to obtain a corresponding control signal. The central controller 11 may be further connected to an external sensor such as an inertia sensor, a wheel speed sensor, or a braking pedal sensor, to obtain the running state of the motor.

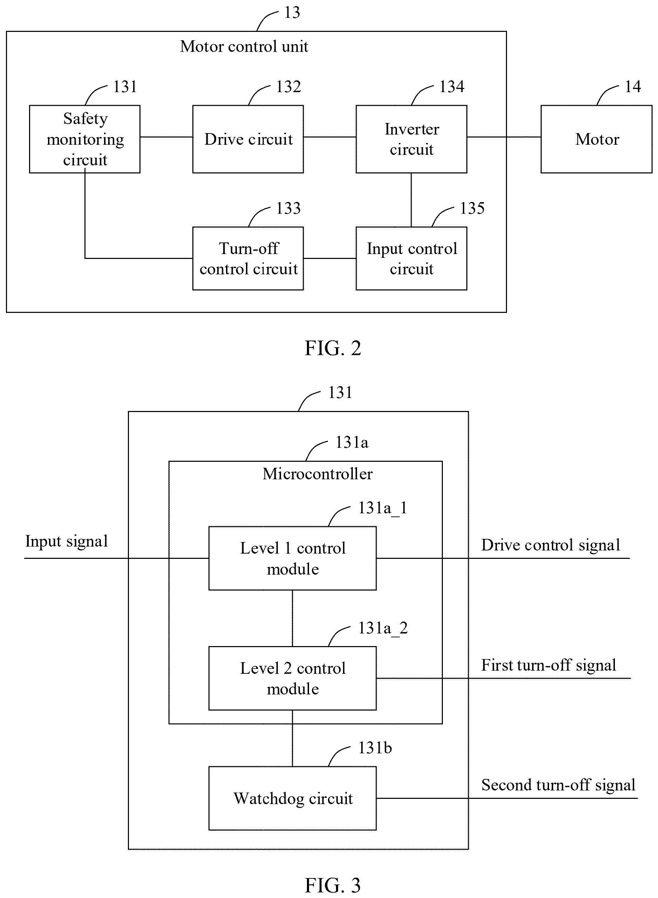

FIG. 2 is a diagram of a structure of the motor control unit 13 according to this application. The motor control unit 13 includes a safety monitoring circuit 131, a drive circuit 132, a turn-off control circuit 133, an inverter circuit 134, and an input control circuit 135.

The inverter circuit 134 is electrically connected to the motor 14. The inverter circuit 134 includes a plurality of switching bridge arms, each switching bridge arm includes an upper bridge arm switching transistor and a lower bridge arm switching transistor, and a midpoint of each switching bridge arm outputs a single-phase alternating current to the motor 14, to supply alternating current power to the motor 14. For example, the inverter circuit 134 may include an inverter circuit such as a two-phase inverter circuit or a three-phase inverter circuit, to convert a received bus voltage into an alternating current voltage, and supply power to the motor 14. The motor 14 may convert alternating current electrical energy output by the inverter circuit 134 into mechanical energy, to drive a corresponding wheel to rotate or brake.

The input control circuit 135 is electrically connected between the inverter circuit 134 and a power source. The input control circuit 135 is controlled by the turn-off control circuit 133, to disconnect or connect an electrical connection between the power source and the inverter circuit 134. The input control circuit 135 receives an input voltage provided by the power source. When the input control circuit 135 is connected, the input voltage supplies power to the inverter circuit 134, and the inverter circuit 134 is turned on. When the input control circuit 135 is disconnected, a loop between the input voltage and the inverter circuit 134 is disconnected, and the inverter circuit 134 is turned off.

The drive circuit 132 is electrically connected to the inverter circuit 134. The drive circuit 132 is configured to output a drive signal to a bridge arm switching transistor in the inverter circuit 134, to control turn-on or turn-off of the bridge arm switching transistor in the inverter circuit 134, so as to supply corresponding alternating current power to the motor 14, so that the motor 14 can output corresponding torque.

The safety monitoring circuit 131 is electrically connected to the drive circuit 132 and the turn-off control circuit 133. The safety monitoring circuit 131 is configured to output a turn-off signal to the drive circuit 132 and the turn-off control circuit 133, and output a drive control signal to the drive circuit 132. In response to receiving the turn-off signal, the drive circuit 132 can output a drive signal, to control turn-on or turn-off of the bridge arm switching transistor in the inverter circuit 134.

The turn-off control circuit 133 is electrically connected to the input control circuit 135. The turn-off control circuit 133 is configured to: in response to receiving the turn-off signal, control the input control circuit 135 to disconnect the electrical connection between the power source and the inverter circuit 134.

FIG. 3 is a diagram of a structure of the safety monitoring circuit 131 according to this application. The safety monitoring circuit 131 includes a microcontroller 131a and a watchdog circuit 131b. The microcontroller 131a includes a level 1 control module 131a_1 and a level 2 control module 131a_2. The microcontroller 131a and the watchdog circuit 131b form an EGAS architecture.

The level 1 control module 131a_1 forms a level 1 (Level 1) of the EGAS architecture. The level 1 control module 131a_1 is configured to receive an input signal, and calculate target torque based on the input signal, to obtain a drive control signal. Specifically, the level 1 control module 131a_1 may sample the input signal, to obtain a running parameter of the motor 14 included in the input signal, and calculate the target torque based on the running parameter of the motor 14, to obtain the drive control signal. For example, the input signal may include a detection signal output by a sensor, and the detection signal may be a signal indicating an output voltage of the motor control unit 13, a signal indicating an output current of the motor control unit 13, a signal indicating a temperature of the motor control unit 13, a signal indicating a rotational speed of the motor 14, or the like.

The level 2 control module 131a_2 forms a level 2 (Level 2) of the EGAS architecture. The level 2 control module 131a_2 is electrically connected to the level 1 control module 131a_1. The level 2 control module 131a_2 is configured to: receive the input signal sampled by the level 1 control module 131a_1, and in response to the sampled input signal being abnormal, output a first turn-off signal. Specifically, that the input signal is abnormal may include: Current torque of the motor 14 indicated by the input signal is abnormal, target torque of the motor 14 indicated by the input signal is abnormal, a sensor signal is abnormal, or the like. For example, the level 2 control module 131a_2 may detect, by using the sampled input signal, that the target torque of the motor 14 is abnormal, to output the first turn-off signal. That the torque is abnormal may include: The current torque of the motor 14 does not match output torque of the motor control unit 13, the current torque of the motor 14 does not match the target torque indicated by the drive control signal, the target torque exceeds a preset torque range, or the like.

For another example, the level 2 control module 131a_2 may determine, by using the sampled input signal, that the detection signal is abnormal, to determine that a sensor is faulty, and therefore output the first turn-off signal. That the detection signal is abnormal may include: A current detection signal output by the sensor exceeds a preset threshold, a voltage detection signal exceeds a preset threshold, or the like.

For another example, the level 2 control module 131a_2 may determine, by using the sampled input signal, that a functional safety (functional safety) fault occurs in another component, and therefore output the first turn-off signal.

The watchdog circuit 131b forms a level 3 (Level 3) of the EGAS architecture. The watchdog circuit 131b is electrically connected to the level 2 control module 131a_2. The watchdog circuit 131b is configured to: in response to abnormal working of the level 2 control module 131a_2, output a second turn-off signal. For example, the watchdog circuit 131b may detect whether an abnormality determining rule of the level 2 control module 131a_2 for the input signal is correct, and output the second turn-off signal if the abnormality determining rule is incorrect.

In some embodiments, that the watchdog circuit 131b responds to the abnormal working of the level 2 control module 131a_2 may include: The level 2 control module 131a_2 periodically outputs a watchdog feeding signal to the watchdog circuit 131b, so that a timer in the watchdog circuit 131b is reset periodically. If the watchdog circuit 131b receives no watchdog feeding signal within preset time, it outputs the second turn-off signal after the timer in the watchdog circuit 131b expires within the preset time.

In some embodiments, the level 1 control module 131a_1 may also receive the adjustment signal output by the central controller 11, and generate a drive control signal based on an indication of the adjustment signal, to control the inverter circuit 134 to output specific torque to the motor 14. In some embodiments, the level 2 control module 131a_2 may also receive a fault signal output by the drive circuit 132, and output the first turn-off signal based on the fault signal.

In some embodiments, the level 1 control module 131a_1 is connected to the drive circuit 132 through a PWM pin, to output a drive control signal to the drive circuit 132 through the PWM pin. The level 2 control module 131a_2 is connected to the drive circuit 132 and the turn-off control circuit 133 through a disable pin, to output the first turn-off signal to the drive circuit 132 and the turn-off control circuit 133 through the disable pin. The level 2 control module 131a_2 is connected to the drive circuit 132 through a fault pin, to receive, through the fault pin, the fault signal output by the drive circuit 132.

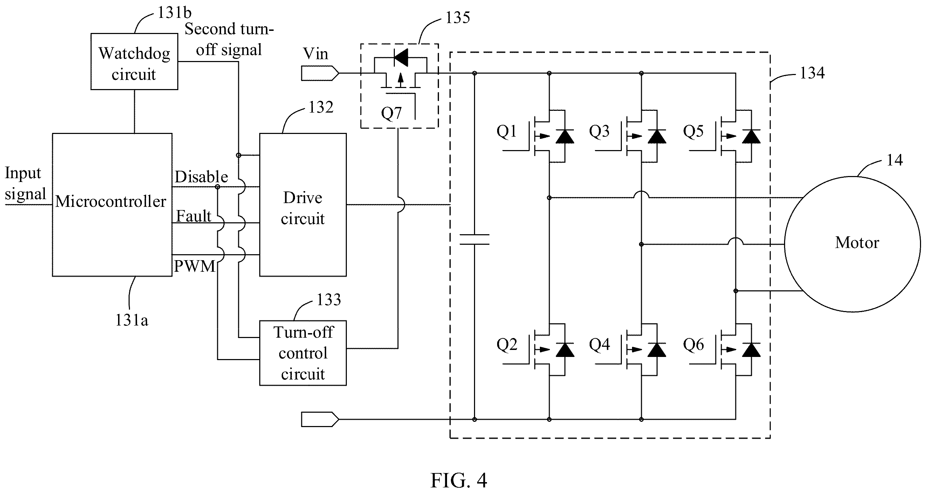

FIG. 4 is a circuit schematic of the inverter circuit 134 and the input control circuit 135 according to this application. The inverter circuit 134 includes three switching bridge arms and an input capacitor C. Each switching bridge arm includes an upper bridge arm switching transistor and a lower bridge arm switching transistor. A first switching bridge arm includes a switching transistor Q1 and a switching transistor Q2. A second switching bridge arm includes a switching transistor Q3 and a switching transistor Q4. A third switching bridge arm includes a switching transistor Q5 and a switching transistor Q6. The input control circuit 135 includes a main switching transistor Q7. One end of an upper bridge arm switching transistor (the switching transistor Q1, the switching transistor Q3, or the switching transistor Q5) of each bridge arm is electrically connected to one end of the main switching transistor Q7, and another end of the main switching transistor Q7 receives an input voltage Vin. A bridge arm midpoint of each switching bridge arm, that is, a connection point between the upper bridge arm switching transistor and the lower bridge arm switching transistor, outputs a single-phase alternating current to the motor 14, to provide torque for the motor 14. Two ends of the capacitor C are connected to two ends of each switching bridge arm.

A gate of each switching transistor in the inverter circuit 134 is electrically connected to the drive circuit 132, to receive the drive signal output by the drive circuit 132. Each switching transistor in the inverter circuit 134 is turned on or off based on the drive signal, to control parameters such as a frequency, a phase, and an amplitude of an output current of the inverter circuit 134, so as to adjust torque output by the inverter circuit 134 to the motor 14.

A gate of the main switching transistor Q7 is electrically connected to the turn-off control circuit 133, to receive the turn-off control signal output by the turn-off control circuit 133. The main switching transistor Q7 is turned off based on the turn-off control signal. It may be understood that, when the main switching transistor Q7 is turned on, the inverter circuit 134 may receive power supplied by the input voltage Vin, to work normally. When the main switching transistor Q7 is turned off, a loop between the inverter circuit 134 and the input voltage Vin is cut off, and the inverter circuit 134 stops working, to stop outputting torque to the motor 14.

The following describes a working principle of the motor control unit 13 provided in this application with reference to FIG. 3 and FIG. 4.

The level 1 control module 131a_1 receives an input signal, calculates target torque based on the input signal, and generates a corresponding drive control signal, to output the drive control signal to the drive circuit 132. The drive circuit 132 may generate a corresponding drive signal based on the drive control signal, to output the drive signal to the switching transistor in the inverter circuit 134, to control the switching transistors Q1 to Q6 to be turned on or off, so as to provide corresponding torque for the motor 14.

When the input signal is abnormal, in response to the abnormal input signal, the level 2 control module 131a_2 outputs the first turn-off signal to the drive circuit 132 and the turn-off control circuit 133. The drive circuit 132 controls, based on the first turn-off signal, the inverter circuit 134 to be turned off. The turn-off control circuit 133 controls, based on the first turn-off signal, the main switching transistor Q7 to be turned off. That the input signal is abnormal may include: Torque is abnormal, a sensor is abnormal, functional safety exception of another component is abnormal, and the like. For details, refer to descriptions in FIG. 2. Details are not described herein again. That the drive circuit 132 controls, based on the first turn-off signal, the inverter circuit 134 to be turned off may include: The drive circuit 132 controls, based on the first turn-off signal, all switching transistors in the inverter circuit 134 to be turned off, so that the inverter circuit 134 enters a safety pulse off (Safety Pulse Off, SPO) safe state; or the drive circuit 132 controls, based on the first turn-off signal, all upper bridge switching transistors in the inverter circuit 134 to be turned off and lower bridge switching transistors to be turned on, so that the inverter circuit 134 enters an active short circuit (Active Short Circuit, ASC) safe state.

When the level 2 control module 131a_2 works abnormally, the watchdog circuit 131b may output the second turn-off signal to the drive circuit 132 and the turn-off control circuit 133. The drive circuit 132 controls, based on the second turn-off signal, the inverter circuit 134 to be turned off. The turn-off control circuit 133 controls, based on the second turn-off signal, the main switching transistor Q7 to be turned off.

Therefore, according to the motor control unit 13 provided in this application, the input control circuit 135 is disposed in front of the inverter circuit 134, and forms three turn-off paths in cooperation with the safety monitoring circuit 131, the drive circuit 132, and the turn-off control circuit 133, so that dual redundant turn-off torque output can be implemented, thereby enhancing safety of the motor control unit 13, and reducing layout costs and an occupied area of a switching transistor.

This application further provides an electric vehicle, including the motor control unit 13 or the vehicle braking system 10 provided in this application.

A person of ordinary skill in the art should understand that the foregoing implementations are merely intended to describe this application but are not intended to limit this application, and all appropriate modifications and changes made to the foregoing embodiments fall within the protection scope of this application provided that the modifications and changes are within the spirit and scope of the essence of this application.

## Claims

1. A motor control unit, comprising an inverter circuit, a safety monitoring circuit, a drive circuit, a turn-off control circuit, and an input control circuit, wherein an input of the input control circuit is connected to a power source, an output of the input control circuit is connected to an input of the inverter circuit, and an output of the inverter circuit is connected to a motor;
an output of the safety monitoring circuit is connected to an input of the drive circuit and an input of the turn-off control circuit, and the safety monitoring circuit is configured to output a turn-off signal to the drive circuit and the turn-off control circuit;
an output of the drive circuit is connected to the inverter circuit, and in response to receiving the turn-off signal, the drive circuit controls the inverter circuit to stop working; and
an output of the turn-off control circuit is connected to the input control circuit, and in response to receiving the turn-off signal, the turn-off control circuit controls the input control circuit to disconnect an electrical connection between the power source and the inverter circuit.

2. The motor control unit according to claim 1, wherein the input control circuit comprises a switching transistor, an input of the switching transistor is connected to the power source, an output of the switching transistor is connected to the input of the inverter circuit, the turn-off control circuit is connected to the switching transistor, and that the turn-off control circuit controls the input control circuit to disconnect the electrical connection between the power source and the inverter circuit comprises:
the turn-off control circuit controls the switching transistor to be turned off.

3. The motor control unit according to claim 1, wherein the safety monitoring circuit comprises a microcontroller and a watchdog circuit, and the turn-off signal comprises a first turn-off signal and a second turn-off signal;
an output of the microcontroller is connected to the input of the drive circuit and the input of the turn-off control circuit, and the microcontroller is configured to output the first turn-off signal to the drive circuit and the turn-off control circuit;
an output of the watchdog circuit is connected to the input of the drive circuit and the input of the turn-off control circuit, and the watchdog circuit is configured to output the second turn-off signal to the drive circuit and the turn-off control circuit;
in response to receiving the first turn-off signal or the second turn-off signal, the drive circuit controls the inverter circuit to stop working; and
in response to receiving the first turn-off signal or the second turn-off signal, the turn-off control circuit controls the input control circuit to disconnect the electrical connection between the power source and the inverter circuit.

4. The motor control unit according to claim 3, wherein an input of the microcontroller is configured to receive an input signal, the input signal indicates target torque of the motor, and the microcontroller is configured to:
in response to the target torque exceeding a preset torque range, output the first turn-off signal to the drive circuit and the turn-off control circuit.

5. The motor control unit according to claim 3, wherein an input of the microcontroller is connected to the output of the drive circuit, and the microcontroller is configured to:
in response to receiving a fault signal output by the drive circuit, output the first turn-off signal to the drive circuit and the turn-off control circuit, wherein the fault signal indicates that a fault occurs in the drive circuit.

6. The motor control unit according to claim 3, wherein an input of the watchdog circuit is connected to the microcontroller, and the watchdog circuit is configured to:
in response to receiving no watchdog feeding signal from the microcontroller within preset time, output the second turn-off signal to the drive circuit and the turn-off control circuit.

7. The motor control unit according to claim 4, wherein the microcontroller is further configured to:
control turn-on or turn-off of a switching transistor in the inverter circuit based on the input signal, so that the motor outputs the target torque.

8. The motor control unit according to claim 1, wherein the inverter circuit comprises three switching bridge arms, each switching bridge arm comprises an upper bridge arm switching transistor and a lower bridge arm switching transistor, the output of the drive circuit is connected to each of the upper bridge arm switching transistors and the lower bridge arm switching transistors, and that the drive circuit controls the inverter circuit to stop working comprises:
the drive circuit controls each of the upper bridge arm switching transistors to be turned off and each of the lower bridge arm switching transistors to be turned off.

9. The motor control unit according to claim 2, wherein the switching transistor is a MOS transistor, the input of the switching transistor is a drain of the MOS transistor, and the output of the switching transistor is a source of the MOS.

10. A vehicle braking system, comprising a central controller, wheel-side actuators, and motors, wherein the central controller is connected to the wheel-side actuators and is configured to control the wheel-side actuators, the wheel-side actuators are connected to the motors and are configured to control running of the motors, and the wheel-side actuators comprise the motor control unit according to any one of claims 1 to 9.

11. An electric vehicle, comprising the motor control unit according to any one of claims 1 to 9 or the vehicle braking system according to claim 10 and a plurality of wheels, wherein
each of the plurality of wheels is connected to the motor control unit or the vehicle braking system, and the motor control unit or the vehicle braking system is configured to control running of each wheel.
